# EUROPEAN PATENT APPLICATION

(11) **EP 4 480 982 A1**
(43) Date of publication of application: **25.12.2024**
(21) Application number: 23180928.6
(22) Date of filing: 22.06.2023
(51) Int. Cl.: C08G 59/18, C08G 59/50, C08G 59/68, C09J 163/00

(54) **HEAT-CURING EPOXY RESIN COMPOSITION HAVING HIGH STORAGE STABILITY**

(71) Applicant: Sika Technology AG, 6340 Baar (CH)
(72) Inventor: GABERELL, Fabio, 3280 Murten (CH); SCHÜTZ, Andri, 8050 Zürich (CH); KRÜGER, Christian, 8919 Rottenschwil (CH); PARIPOVIC, Dusko, 8049 Zürich (CH); MUNZINGER, Noah, 8047 Zürich (CH)
(74) Representative: Sika Patent Attorneys

(57) **Abstract**

The present invention relates to thermosetting epoxy resin compositions which on the one hand have high storage stability and nevertheless also have satisfactory mechanical properties. The one-component thermosetting epoxy resin composition comprises a) at least one epoxy resin A having an average of more than one epoxy group per molecule; b) porous particles PP, preferably silica particles PS, which have incorporated in the pores at least one component ComP which is: i) a curing agent for epoxy resins B, or ii) an accelerator C for curing agents for epoxy resins.

## Description

### Technical field

The invention relates to the field of thermosetting epoxy resin compositions, especially for use as bodywork adhesive and for production of structural foams.

### Prior art

Thermosetting epoxy resin compositions have long been known. An important field of use of thermosetting epoxy resin compositions is in motor vehicle construction, especially in bonding or the foam-filling of voids in the bodywork. In both cases, after the application of the epoxy resin composition, the bodywork is heated in the cathodic electrocoating oven, because of which the thermosetting epoxy resin composition is cured and optionally foamed.

In order that curing is possible, heat-activatable curing agents for epoxy resins are used. However, these heat-activatable curing agents lead to problems with the storage stability of the thermosetting epoxy resin compositions. Especially in the case of additional use of accelerators for said curing agents, for example ureas, latent imidazoles and amine-boron trifluoride complexes, this problem is particularly marked. There is therefore a need for thermosetting epoxy resin compositions which on the one hand have high storage stability and nevertheless also have satisfactory mechanical properties.

### Summary of the invention

It is therefore an object of the present invention to provide thermosetting epoxy resin compositions which on the one hand have high storage stability and nevertheless also have satisfactory mechanical properties.

This object was surprisingly achieved by a thermosetting epoxy resin composition as claimed in claim 1. This epoxy resin composition can be used particularly efficiently as a one-component thermosetting adhesive, especially as a thermosetting one-component bodywork adhesive in motor vehicle construction, and for production of a structural foam for the reinforcement of voids, especially in metallic structures.

Further aspects of the invention form the subject matter of further independent claims. Particularly preferred embodiments of the invention form the subject matter of the dependent claims.

### Ways of executing the invention

The present invention relates to one-component thermosetting epoxy resin compositions comprising
a) at least one epoxy resin **A** having an average of more than one epoxy group per molecule;
b) porous particles **PP,** selected from the group consisting of zeolite particles, perlite particles, phonolite particles, calcium silicate particles, silica particles **PS**, foamed polyurethane particles, expanded vermiculite particles, fumed metal oxide particles, and kieselguhr particles, preferably silica particles **PS**,
which have incorporated in the pores at least one component **ComP** which is:
- i) a curing agent for epoxy resins **B**, or
- ii) an accelerator C for curing agents for epoxy resins.

In this document, the use of the term "independently" in connection with substituents, radicals or groups should be interpreted such that the substituents, radicals or groups having the same designation in the same molecule may occur simultaneously with different meanings.

In this document, a "toughness improver" is understood to mean an addition to an epoxy resin matrix that results in a distinct increase in toughness even in the case of small additions of ≥ 5% by weight, especially ≥ 10% by weight, based on the total weight of the epoxy resin compositions and is thus capable of absorbing higher flexural, tensile, impact or shock stress before the matrix cracks or breaks. The prefix "poly" in substance names such as "polyol", "polyisocyanate", "polyether" or "polyamine" in the present document indicates that the respective substance, in a formal sense, contains more than one of the functional groups that occur in its name per molecule.

In the present document, "molecular weight" is understood to mean the molar mass (in grams per mole) of a molecule. "Average molecular weight" is understood to mean the number-average molecular weight Mₙ of an oligomeric or polymeric mixture of molecules, which is typically determined by means of GPC against polystyrene as standard.

In the present document, the term "primary amino group" refers to an NH₂ group bonded to one organic radical, while the term "secondary amino group" refers to an NH group bonded to two organic radicals which may also together be part of a ring. Accordingly, an amine having one primary amino group is referred to as "primary amine", one having a secondary amino group correspondingly as "secondary amine", and one having a tertiary amino group as "tertiary amine".

In the present document, "room temperature" refers to a temperature of 23°C.

The epoxy resin **A** having an average of more than one epoxy group per molecule is preferably a liquid epoxy resin or a solid epoxy resin. The term "solid epoxy resin" is very familiar to the person skilled in the art of epoxies and is used by contrast with "liquid epoxy resins". The glass transition temperature of solid resins is above room temperature, meaning that they can be comminuted at room temperature to give free-flowing powders.

Preferred epoxy resins have the formula (II)

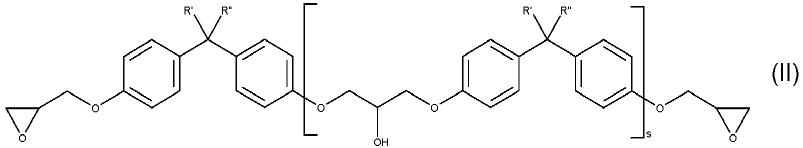

The substituents R' and R" here are independently either H or CH₃.

In solid epoxy resins, the index s has a value of > 1.5, especially of 2 to 12. Solid epoxy resins of this kind are commercially available, for example from Dow or Huntsman or Hexion.

Compounds of the formula (II) having an index s of 1 to 1.5 are referred to as semisolid epoxy resins by the person skilled in the art. For this present invention, they are likewise considered to be solid resins. However, preferred solid epoxy resins are epoxy resins in the narrower sense, i.e. where the index s has a value of > 1.5.

In liquid epoxy resins, the index s has a value of less than 1. Preferably, s has a value of less than 0.2.

Preference is thus given to diglycidyl ethers of bisphenol A (DGEBA), of bisphenol F, and of bisphenol A/F. Such liquid resins are available, for example, as Araldite^{®} GY 250, Araldite^{®} PY 304, Araldite^{®} GY 282 (Huntsman) or D.E.R.^{™} 331 or D.E.R.^{™} 330 (Dow) or Epikote 828 (Hexion).

Further suitable epoxy resins **A** are what are called epoxy novolaks. More particularly, these are phenol or cresol epoxy novolaks. Such epoxy resins are commercially available under the EPN or ECN and Tactix^{®} trade names from Huntsman or from the D.E.N.^{™} product series from Dow Chemical.

Preferably, the epoxy resin **A** is a liquid epoxy resin of the formula (II).

In a particularly preferred embodiment, the thermosetting epoxy resin composition contains both at least one liquid epoxy resin of the formula (II) with s < 1, especially less than 0.2, and at least one solid epoxy resin of the formula (II) with s > 1.5, especially from 2 to 12.

The proportion of the epoxy resin **A** is preferably 10-60% by weight, especially 30-50% by weight, based on the total weight of the epoxy resin composition.

It is further advantageous when 50-100% by weight, especially 80-100% by weight, of the epoxy resin **A** is an aforementioned liquid epoxy resin.

It is further advantageous when 0-30% by weight, especially 0-20% by weight, more preferably 5-15% by weight, of the epoxy resin **A** is an aforementioned solid epoxy resin.

The one-component thermosetting epoxy resin composition comprises b) porous particles **PP,** selected from the group consisting of zeolite particles, perlite particles, phonolite particles, calcium silicate particles, silica particles **PS**, foamed polyurethane particles, expanded vermiculite particles, fumed metal oxide particles, and kieselguhr particles, which have incorporated in the pores at least one component **ComP** which is:
- i) a curing agent for epoxy resins **B**, or
- ii) an accelerator **C** for curing agents for epoxy resins.

This is advantageous with respect to improved storage stability. This can be seen, for example, from table 3 that shows that components **ComP** incorporated in the pores of silicate particles (PS) show improved storage stability compared to the addition of components **ComP** not loaded on silicate particles.

The porous particles **PP** preferably have a pore size of 4 - 30 nm, preferably 5 - 10 nm, more preferably 5 - 8 nm. Preferably, the pore size is determined by nitrogen absorption.

The porous particles **PP** preferably have a particle size from 5 - 500 µm, preferably 20 - 150 µm, more preferably 30 - 100 µm. This is advantageous with respect to improved storage stability. Preferably, the particle size is determined by laser diffraction.

Preferably, the amount of the at least one component **ComP,** incorporated in the pores of the porous particles **PP,** is 4 - 50 wt.-%, preferably 8 - 40 wt.-%, more preferably 10- 35 wt.-%, based on the total weight of the porous particles **PP.**

Preferably, the one-component thermosetting epoxy resin composition contains 0.05 - 5 % by weight, preferably 0.1 - 2 % by weight, more preferably 0.2 - 1 % by weight, based on the total weight of the epoxy resin composition, of said porous particles **PP.**

It is further preferred if the porous particles **PP** are porous silica particles **PS.** Preferably, such porous silica particles **PS** are based on silicon dioxide. It is further preferred if the porous silica particles **PS** are mesoporous silica particles. Preferably, the porous silica particles **PS** are spherical in shape.

The porous particles **PP** can be derivatized or non-derivatized porous silica particles **PS.** For derivatization, aliphatic chains, especially C8 - C18 chains, can be used for the hydrophobization of the porous particles. Preferably, the porous particles **PP** are non-derivatized porous silica particles **PS.**

This is advantageous with respect to improved storage stability. This can be seen, for example, from table 3 that shows that the loaded non-derivatized silicate particles (PS1) show improved storage stability compared to derivatized silicate particles (PS2).

Such porous particles **PP** are commercially available, for example, as ZEOprep^{®} from Zeochem.

Preferably, the at least one component **ComP** is incorporated in the pores of the porous particles **PP,** by a method, which comprises
I) dispersing the porous particles **PP** in the at least one component **ComP,** optionally in the presence of a solvent; or
I') adding the at least one component **ComP,** optionally as a solution containing a solvent, to the particles **PP;** and
II) preferably isolating the porous particles **PP** containing the at least one component **ComP** incorporated in the pores of the porous particles **PP;** and
III) optionally removing any solvent, preferably by evaporation, more preferably by vacuum evaporation.

Preferably, said method uses step I').

Said solvent is preferably water or an organic solvent or mixtures thereof. Preferred organic solvents are selected from the list consisting of alcohols, esters, ethers, ketones, aliphatic hydrocarbons and aromatic hydrocarbons.

The at least one component **ComP** is:
- i) a curing agent for epoxy resins **B**, or
- ii) an accelerator **C** for curing agents for epoxy resins.

Preferably the at least one component **ComP** is ii) an accelerator **C** for curing agents for epoxy resins.

In a preferred embodiment, the curing agent for epoxy resins **B** is selected from the list consisting of aliphatic, cycloaliphatic or arylaliphatic primary di- or triamines; ether group-containing aliphatic primary di- or triamines; and polyamines containing secondary amino groups, preferably ether group-containing aliphatic primary di- or triamines.

This is advantageous with respect to improved storage stability. It can be seen from table 3 that component **B2** incorporated in the pores of silicate particles (PS) show significantly improved storage stability compared to the addition of **B2** not loaded on silicate particles. This effect was even more pronounced in the case of **B2** being loaded on non-derivatized silicate particles (PS1). Such curing agents are further preferred due to their availability in liquid form that allows the loading into the porous particles without the need of dispersing the curing agent in a solvent.

Preferred ether group-containing aliphatic primary di- or triamines are primary polyoxyalkylene di- or -triamines, especially 3,3'-[Oxybis(2,1-ethanediyloxy)]bis-1-propanamine.

Such primary polyoxyalkylene di- or -triamines are commercially available, for example, as Ancamine 1922A from Evonik.

Preferably, the curing agent for epoxy resins **8** is present in the one-component thermosetting epoxy resin composition in an amount that the ratio of the number of groups reactive toward epoxy groups of the curing agent **B** to the number of epoxy groups of the epoxy resin **A** is preferably in the range from 0.7 to 1.2, in particular 0.8 to 1.0, particularly preferably 0.90 until 0.98.

A preferred accelerator **C** is selected from the list consisting substituted ureas, imidazoles, imidazolines, blocked amines and tertiary amines, preferably substituted ureas, imidazoles and tertiary amines, more preferably imidazoles.

Preferred substituted ureas are selected from the list consisting of 3-(3-chloro-4-methylphenyl)-1,1-dimethylurea (chlortoluron); phenyldimethylureas, especially p-chlorophenyl-N,N-dimethylurea (monuron), 3-phenyl-1,1-dimethylurea (fenuron), 3,4-dichlorophenyl-N,N-dimethylurea (diuron) and 1,1'-(4-Methyl-1,3-phenylene)bis(3,3-dimethylurea); and 1,1-dimethylurea, preferably 1,1'-(4-Methyl-1,3-phenylene)bis(3,3-dimethylurea) and 1,1-dimethylurea.

The tertiary amine is preferably selected from the group consisting of 2-(dimethylaminomethyl)phenol, 2,6-bis(dimethylaminomethyl)phenol, 2,4-bis(dimethylaminomethyl)phenol, 2,4,6-tris( dimethylaminomethyl)phenol and 2,4,6-tris(((3-(dimethylamino)propyl)amino)methyl)phenol, especially 2,4,6-tris(((3-(dimethylamino)propyl)amino)methyl )phenol and 2,4,6-tris(dimethylaminomethyl)phenol. Most preferably, the tertiary amine tAM is a mixture of 2,4,6-tris(((3-(dimethylamino)propyl)amino)methyl)phenol and 2,4,6-tris(dimethylaminomethyl)phenol.

Such a mixture of 2,4,6-tris(((3-(dimethylamino)propyl)amino)methyl)phenol and 2,4,6-tris(dimethylaminomethyl)phenol is commercially available, for example, as Ancamine K54 from Evonik.

Preferred imidazoles are N-aminoalkylimidazolyl compounds. Preferred N-aminoalkylimidazolyl compounds are compounds of general formula (IV): 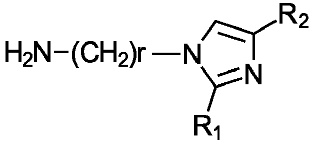 in which R₁ and R₂, independently of one another, are aliphatic or aromatic hydrocarbon radicals, but in particular H-, CH₃, C₂H₅-, preferably H-, and the index r = 2-4, in particular = 3. Most preferably it is (1-(3-aminopropyl)imidazole).

This is advantageous with respect to improved storage stability. It can be seen from table 5 and 6 that components **C1** incorporated in the pores of silicate particles (PS) show significantly improved storage stability and tensile shear strength upon curing at 180°C for 30 min compared to the addition of component **C1** not loaded on silicate particles.

Preferred imidazoles are also imidazolium salts of formula (V): 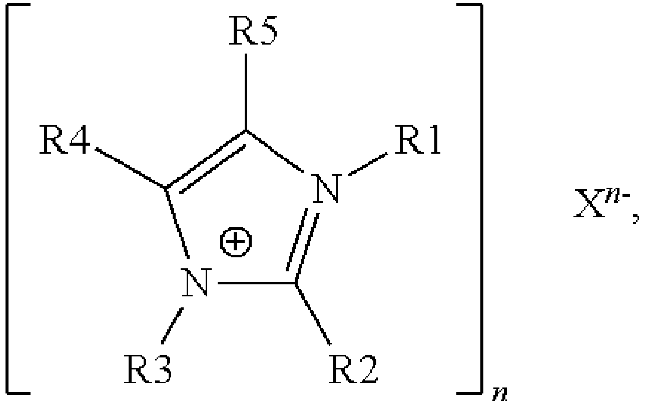 in which
R1 is an organic radical having 1 to 20 C atoms,
R2, R3, R4, and R5 are each an H atom or an organic radical having 1 to 20 C atoms,
X is an anion, and
n is 1, 2, or 3, preferably 1.

This is advantageous with respect to improved storage stability. It can be seen from table 3 that component **C4** incorporated in the pores of silicate particles (PS) show significantly improved storage stability compared to the addition of **C4** not loaded on silicate particles. This effect was even more pronounced in the case of **C4** being loaded on non-derivatized silicate particles (PS1).

Preferably, the anion is selected from the group consisting of alkylsulfates; alkylsulfonates; halides, more particularly chloride, bromide and iodide; thiocyanate; dicyanamide; carboxylates; phosphates, more particularly dimethylphosphate and diethylphosphate; and phosphonates.

Particularly preferred anions are selected from the group consisting of methanesulfonate, trifluoromethanesulfonate, dimethylphosphate, diethylphosphate, methylsulfate, ethylsulfate, thiocyanate, and dicyanamide. Especially preferred are thiocyanate (SCN-) and dicyanamide.

In formula (V) R1 and R3 are preferably, independently of one another, an organic radical having 1 to 10 C atoms. More particularly R1 and R3 are an aliphatic radical, more particularly an aliphatic radical without further heteroatoms, such as an alkyl group, for example. With particular preference R1 and R3 independently of one another are a C1 to C10 or a C1 to C4 alkyl group. Very preferably R1 and R3 independently of one another are a methyl group or an ethyl group.

In formula (V) R2, R4, and R5, preferably independently, are an H atom or an organic radical having 1 to 10 C atoms; more particularly R2, R4, and R5 are an H atom or an aliphatic radical. With particular preference R2, R4, and R5, independently of one another, are an H atom or an alkyl group; more particularly, R2, R4, and R5, independently of one another, are an H atom or a C1 to C4 alkyl group. Very preferably R2, R4, and R5 are each an H atom. Preferably, n is 1.

X is preferably one of the abovementioned and preferred anions, very preferably thiocyanate and dicyanamide.

Most preferably, the imidazolium salts of formula I is selected from 1-methyl-3-methylimidazolium thiocyanate, 1-methyl-3-ethylimidazolium thiocyanate, 1-methyl-3-methylimidazolium dicyanamide and 1-methyl-3-ethylimidazolium dicyanamide, especially 1-methyl-3-methylimidazolium dicyanamide.

Preferably, the accelerator C is present in the one-component thermosetting epoxy resin composition in an amount that the molar ratio of accelerator **C** to epoxy resin **A** is from 0.01 - 70 mmol/mol, preferably 0.1 - 60 mmol/mol, more preferably 0.3 - 50 mmol/mol.

The one-component thermosetting epoxy resin composition preferably contains at least one toughness improver **D.** The toughness improvers **D** may be liquid or solid.

More particularly, the toughness improver **D** is selected from the group consisting of terminally blocked polyurethane polymers **D1**, liquid rubbers **D2** and core-shell polymers **D3.** Preferably, the toughness improver **D** is selected from the group consisting of terminally blocked polyurethane polymers **D1** and liquid rubbers **D2.** Particular preference is given to a terminally blocked polyurethane polymer **D1.**

If the toughness improver **D** is a terminally blocked polyurethane polymer **D1**, it is preferably a terminally blocked polyurethane prepolymer of the formula (I).

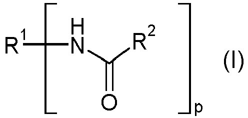

R¹ here is a p-valent radical of a linear or branched polyurethane prepolymer terminated by isocyanate groups after the removal of the terminal isocyanate groups, and p has a value of 2 to 8.

In addition, R² is independently a substituent selected from the group consisting of

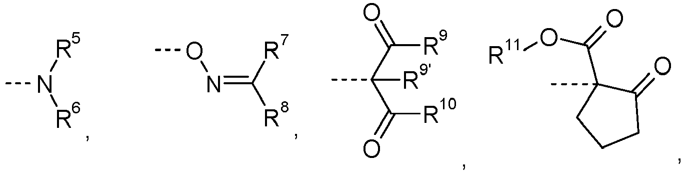

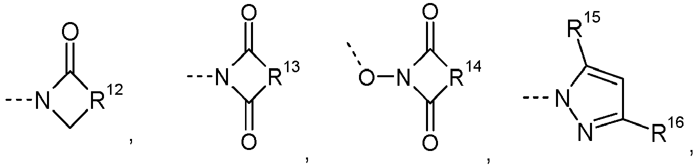

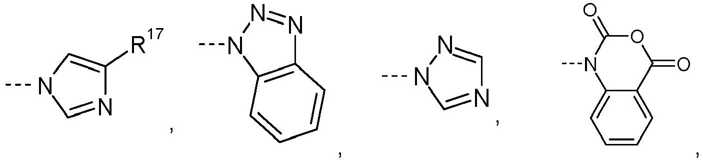

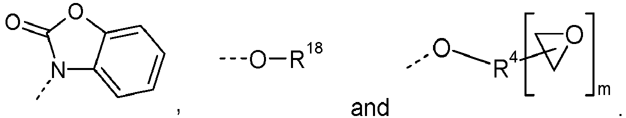

R⁵, R⁶, R⁷ and R⁸ here are each independently an alkyl or cycloalkyl or aralkyl or arylalkyl group, or R⁵ together with R⁶, or R⁷ together with R⁸, form part of a 4- to 7-membered, optionally substituted ring.

In addition, R⁹' and R¹⁰ are each independently an alkyl or aralkyl or arylalkyl group or an alkyloxy or aryloxy or aralkyloxy group, and R¹¹ is an alkyl group.

R¹², R¹³ and R¹⁴ are each independently an alkylene group which has 2 to 5 carbon atoms and optionally has double bonds or is substituted, or a phenylene group or a hydrogenated phenylene group.

R¹⁵, R¹⁶ and R¹⁷ are each independently H or an alkyl group or an aryl group or an aralkyl group, and R¹⁸ is an aralkyl group or a mono- or polycyclic, substituted or unsubstituted aromatic group that optionally has aromatic hydroxyl groups.

Finally, R⁴ is a radical of an aliphatic, cycloaliphatic, aromatic or araliphatic epoxide containing a primary or secondary hydroxyl group after the removal of the hydroxyl and epoxy groups, and m has a value of 1, 2 or 3.

R¹⁸ is especially considered to be firstly phenols or polyphenols, especially bisphenols, after removal of a hydroxyl group. Preferred examples of such phenols and bisphenols are especially phenol, cresol, resorcinol, catechol, cardanol (3-pentadecenylphenol (from cashewnutshell oil)), nonylphenol, phenols that have been reacted with styrene or dicyclopentadiene, bisphenol A, bisphenol F and 2,2'-diallylbisphenol A. R¹⁸ is secondly considered to be especially hydroxybenzyl alcohol and benzyl alcohol after removal of a hydroxyl group.

If R⁵, R⁶, R⁷, R⁸, R⁹, R⁹', R¹⁰, R¹¹, R¹⁵, R¹⁶ or R¹⁷ is an alkyl group, this is especially a linear or branched C₁-C₂₀-alkyl group.

If R⁵, R⁶, R⁷, R⁸, R⁹, R⁹', R¹⁰, R¹⁵, R¹⁶, R¹⁷ or R¹⁸ is an aralkyl group, this moiety is especially a methylene-bonded aromatic group, especially a benzyl group.

If R⁵, R⁶, R⁷, R⁸, R⁹, R⁹' or R¹⁰ is an alkylaryl group, this is especially a phenylenebonded C₁- to C₂₀-alkyl group, for example tolyl or xylyl.

The R² radicals are preferably the substituents of the formulae 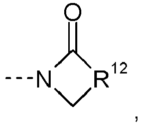 ---O-R¹⁸ and

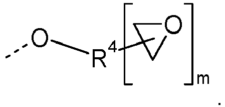

A preferred substituent of the formula 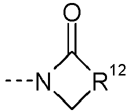 is ε-caprolactam after removal of the NH proton.

Preferred substituents of the formula ---Q-R¹⁸ are monophenols or polyphenols, especially bisphenols, after removal of a phenolic hydrogen atom. Particularly preferred examples of such R² radicals are radicals selected from the group consisting of

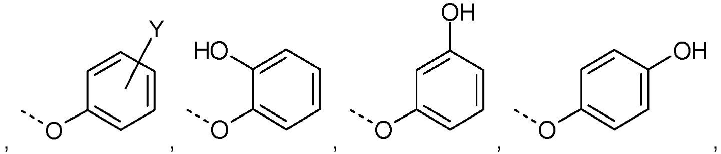

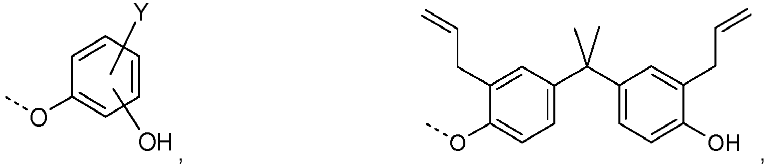

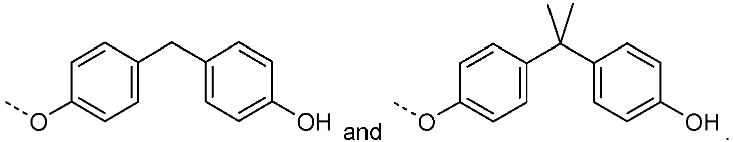

The Y radical here is a saturated, aromatic or olefinically unsaturated hydrocarbyl radical having 1 to 20 carbon atoms, especially having 1 to 15 carbon atoms. Preferred Y are especially allyl, methyl, nonyl, dodecyl, phenyl, alkyl ether, carboxylic ester or an unsaturated C₁₅-alkyl radical having 1 to 3 double bonds.

Most preferably, R² is ---O-R¹⁸ .

The terminally blocked polyurethane prepolymer of the formula (I) is prepared from the linear or branched polyurethane prepolymer terminated by isocyanate groups with one or more isocyanate-reactive compounds R²H. If two or more such isocyanate-reactive compounds are used, the reaction can be effected sequentially or with a mixture of these compounds.

The reaction is preferably effected in such a way that the one or more isocyanate-reactive compounds R²H are used stoichiometrically or in a stoichiometric excess in order to ensure that all NCO groups have been converted.

The polyurethane prepolymer with isocyanate end groups on which R¹ is based can be prepared from at least one diisocyanate or triisocyanate and from a polymer **Q_{PM}** having terminal amino, thiol or hydroxyl groups and/or from an optionally substituted polyphenol **Q_{PP}**.

Suitable diisocyanates are aliphatic, cycloaliphatic, aromatic or araliphatic diisocyanates, especially commercial products such as methylene diphenyl diisocyanate (MDI), hexamethylene diisocyanate (HDI), toluene diisocyanate (TDI), toluidine diisocyanate (TODI), isophorone diisocyanate (IPDI), trimethylhexamethylene diisocyanate (TMDI), 2,5- or 2,6-bis(isocyanatomethyl)bicyclo[2.2.1]heptane, naphthalene 1,5-diisocyanate (NDI), dicyclohexylmethyl diisocyanate (H₁₂MDI), p-phenylene diisocyanate (PPDI), m-tetramethylxylylene diisocyanate (TMXDI), etc. and dimers thereof. Preference is given to HDI, IPDI, MDI or TDI.

Suitable triisocyanates are trimers or biurets of aliphatic, cycloaliphatic, aromatic or araliphatic diisocyanates, especially the isocyanurates and biurets of the diisocyanates described in the previous paragraph. It is of course also possible to use suitable mixtures of di- or triisocyanates.

Especially suitable polymers **Q_{PM}** having terminal amino, thiol or hydroxyl groups are polymers **Q_{PM}** having two or three terminal amino, thiol or hydroxyl groups.

The polymers **Q_{PM}** advantageously have an equivalent weight of 300-6000, especially of 600-4000, preferably of 700-2200, g/equivalent of NCO-reactive groups.

Preferred polymers **Q_{PM}** are polyols having average molecular weights between 600 and 6000 daltons, selected from the group consisting of polyethylene glycols, polypropylene glycols, polyethylene glycol-polypropylene glycol block polymers, polybutylene glycols, hydroxyl-terminated polybutadienes, hydroxyl-terminated butadiene-acrylonitrile copolymers and mixtures thereof.

Especially preferred polymers **Q_{PM}** are α,ω-dihydroxy polyalkylene glycols having C₂-C₆-alkylene groups or having mixed C₂-C₆-alkylene groups, terminated by amino, thiol or, preferably, hydroxyl groups. Particular preference is given to polypropylene glycols or polybutylene glycols. Particular preference is further given to hydroxyl group-terminated polyoxybutylenes.

Especially suitable polyphenols **Q_{PP}** are bis-, tris- and tetraphenols. This is understood to mean not just straight phenols but optionally also substituted phenols. The nature of the substitution may be very varied. More particularly, this is understood to mean substitution directly on the aromatic ring to which the phenolic OH group is bonded. Phenols are additionally understood to mean not just monocyclic aromatics but also polycyclic or fused aromatics or heteroaromatics that have the phenolic OH group directly on the aromatic or heteroaromatic system.

In a preferred embodiment, the polyurethane prepolymer is prepared from at least one diisocyanate or triisocyanate and from a polymer **Q_{PM}** having terminal amino, thiol or hydroxyl groups. The polyurethane prepolymer is prepared in a manner known to the person skilled in the art of polyurethane, especially by using the diisocyanate or triisocyanate in a stoichiometric excess in relation to the amino, thiol or hydroxyl groups of the polymer **Q_{PM}**.

The polyurethane prepolymer having isocyanate end groups preferably has elastic character. It preferably exhibits a glass transition temperature Tg of less than 0°C.

The toughness improver D may be a liquid rubber **D2.** This may be, for example, a carboxyl- or epoxy-terminated polymer.

In a first embodiment, this liquid rubber may be a carboxyl- or epoxy-terminated acrylonitrile/butadiene copolymer or a derivative thereof. Such liquid rubbers are commercially available, for example, under the Hypro/Hypox^{®} CTBN name and CTBNX and ETBN from Emerald Performance Materials. Suitable derivatives are especially elastomer-modified prepolymers having epoxy groups, as sold commercially under the Polydis^{®} product line, especially from the Polydis^{®} 36.. product line, by Struktol^{®} (Schill+Seilacher Gruppe, Germany) or under the Albipox product line (Evonik, Germany).

In a second embodiment, this liquid rubber may be a polyacrylate liquid rubber which is fully miscible with liquid epoxy resins and does not separate to form microdroplets until the epoxy resin matrix is cured. Such polyacrylate liquid rubbers are available, for example, under the 20208-XPA name from Dow.

It is of course also possible to use mixtures of liquid rubbers, especially mixtures of carboxyl- or epoxy-terminated acrylonitrile/butadiene copolymers or of derivatives thereof.

In a third embodiment, the toughness improver D may be a core-shell polymer D3. Core-shell polymers consist of an elastic core polymer and a rigid shell polymer. Particularly suitable core-shell polymers consist of a core of elastic acrylate or butadiene polymer encased by a rigid shell of a rigid thermoplastic polymer. This core-shell structure either forms spontaneously as a result of separation of a block copolymer or is defined by the conduct of the polymerization as a latex or suspension polymerization with subsequent grafting. Preferred core-shell polymers are what are called MBS polymers, which are commercially available under the Clearstrength^{™} trade name from Arkema, Paraloid^{™} from Dow or F-351^{™} from Zeon.

Preferably, the proportion of toughness improver D is 5-50% by weight, 10-40% by weight, 15-30% by weight, more preferably 20-30% by weight, based on the total weight of the epoxy resin composition.

In a further preferred embodiment, the composition additionally comprises at least one filler **F.** Preference is given here to mica, talc, kaolin, wollastonite, feldspar, syenite, chlorite, bentonite, montmorillonite, calcium carbonate (precipitated or ground), dolomite, quartz, silicas (fused or precipitated), cristobalite, calcium oxide, aluminum hydroxide, magnesium oxide, hollow ceramic beads, hollow glass beads, hollow organic beads, glass beads, color pigments.

Particular preference is given to fillers selected from the group consisting of calcium carbonate (precipitated or ground), fumed silicas and calcium oxide.

Advantageously, the total proportion of the overall filler **F** is 5-45% by weight, preferably 10-40% by weight, based on the total weight of the epoxy resin composition.

In a further preferred embodiment, the composition may comprise a physical or chemical blowing agent as obtainable, for example, under the Expancel^{™} trade name from Akzo Nobel or Celogen^{™} from Chemtura or under the Luvopor^{®} trade name from Lehmann & Voss. The proportion of the blowing agent is advantageously 0.1-3% by weight, based on the total weight of the epoxy resin composition.

In a further preferred embodiment, the composition additionally comprises at least one epoxy-bearing reactive diluent **G.** Such reactive diluents are known to those skilled in the art. Preferred examples of epoxy-bearing reactive diluents are:
- glycidyl ethers of monofunctional saturated or unsaturated, branched or unbranched, cyclic or open-chain C₄-C₃₀ alcohols, e.g. butanol glycidyl ether, hexanol glycidyl ether, 2-ethylhexanol glycidyl ether, allyl glycidyl ether, tetrahydrofurfuryl and furfuryl glycidyl ether, trimethoxysilyl glycidyl ether etc.;
- glycidyl ethers of difunctional saturated or unsaturated, branched or unbranched, cyclic or open-chain C₂-C₃₀ alcohols, for example ethylene glycol glycidyl ether, butanediol glycidyl ether, hexanediol glycidyl ether, octanediol glycidyl ether, cyclohexanedimethanol diglycidyl ether, neopentyl glycol diglycidyl ether etc;

- glycidyl ethers of tri- or polyfunctional, saturated or unsaturated, branched or unbranched, cyclic or open-chain alcohols, such as epoxidized castor oil, epoxidized trimethylolpropane, epoxidized pentaerythritol or polyglycidyl ethers of aliphatic polyols such as sorbitol, glycerol or trimethylolpropane etc;
- glycidyl ethers of phenol compounds and aniline compounds, such as phenyl glycidyl ether, cresyl glycidyl ether, p-tert-butylphenyl glycidyl ether, nonylphenol glycidyl ether, 3-n-pentadecenyl glycidyl ether (from cashewnutshell oil), N,N-diglycidylaniline, etc.;
- epoxidized amines such as N,N-diglycidylcyclohexylamine etc.;
- epoxidized mono- or dicarboxylic acids, such as glycidyl neodecanoate, glycidyl methacrylate, glycidyl benzoate, diglycidyl phthalate, tetrahydrophthalate and hexahydrophthalate, diglycidyl esters of dimeric fatty acids etc;
- epoxidized di- or trifunctional, low to high molecular weight polyether polyols, such as polyethylene glycol diglycidyl ether, polypropylene glycol diglycidyl ether etc.

Particular preference is given to hexanediol diglycidyl ether, cresyl glycidyl ether, p-tert-butylphenyl glycidyl ether, polypropylene glycol diglycidyl ether and polyethylene glycol diglycidyl ether.

Advantageously, the total proportion of the epoxy-bearing reactive diluent G is 0.1-15% by weight, preferably 0.1-5% by weight, especially preferably 0.1-2% by weight, more preferably 0.2-1% by weight, based on the total weight of the epoxy resin composition.

The composition may include further constituents, especially catalysts, stabilizers, especially heat and/or light stabilizers, thixotropic agents, plasticizers, solvents, mineral or organic fillers, blowing agents, dyes and pigments, anticorrosives, surfactants, defoamers and adhesion promoters.

Suitable stabilizers are specially optionally substituted phenols such as BHT or Wingstay^{®} T (Elikem), sterically hindered amines or N-oxyl compounds such as TEMPO (Evonik).

A particularly preferred one-component epoxy resin composition comprises:
- 10-60% by weight, especially 30-50% by weight, based on the total weight of the epoxy resin composition, of epoxy resin **A** having an average of more than one epoxy group per molecule; preferably 50-100% by weight, especially 80-100% by weight, of the epoxy resin **A** is a liquid epoxy resin and 0-30% by weight, especially 0-20% by weight, more preferably 0-15% by weight, of the epoxy resin **A** is a solid epoxy resin;
- 0.1 - 2 % by weight, especially 0.2 - 1 % by weight, based on the total weight of the epoxy resin composition, of porous particles **PP,** preferably silica particles **PS,** which have incorporated in the pores at least one component **ComP** which is:
   - i) a curing agent for epoxy resins **B**, or
   - ii) an accelerator **C** for curing agents for epoxy resins;
- preferably at least one toughness improver **D** is selected from the group consisting of terminally blocked polyurethane polymers **D1,** liquid rubbers **D2** and core-shell polymers **D3;** the proportion of toughness improver **D** preferably is 5-50% by weight, 10-40% by weight, 15-30% by weight, more preferably 20-30% by weight, based on the total weight of the epoxy resin composition;
- preferably 5-45% by weight, preferably 10-40% by weight, based on the total weight of the epoxy resin composition, of a filler **F** preferably selected from the group consisting of calcium carbonate (precipitated or ground), fumed silicas and calcium oxide;
- preferably 0-15% by weight, preferably 0-5% by weight, especially preferably 0-2% by weight, more preferably 0-1% by weight, based on the total weight of the epoxy resin composition, of an epoxy-bearing reactive diluent **G;**

It may further be advantageous when the preferred one-component epoxy resin composition has a weight ratio of the at least one epoxy resin **A** having an average of more than one epoxy group per molecule to the porous particles **PP,** which have incorporated in the pores at least one component **ComP (A** : **PP),** of 20-800 : 1, preferably 75-400 : 1, more preferably 150-300 : 1.

It may further be advantageous when the preferred one-component epoxy resin composition consists of the aforementioned constituents to an extent of more than 80% by weight, preferably more than 90% by weight, especially more than 95% by weight, especially preferably more than 98% by weight, most preferably more than 99% by weight, based on the total weight of the epoxy resin composition.

It is advantageous when the epoxy resin composition of the invention has a viscosity at 25°C of 500-3000 Pa*s, especially 1000-2500 Pa*s, preferably 1000-2000 Pa*s. This is advantageous in that this assures good applicability. Preferably, the viscosity is measured as described in the examples.

It is also advantageous when, in the epoxy resin composition of the invention, the viscosity measured at a measurement temperature of 25°C, after storage for 3 days at 60°C one day after production, rises by less than 400%, preferably less than 300%, more preferably less than 250%.

Particular preference is given to thermosetting epoxy resin compositions having, in the cured state:
- a tensile shear strength, especially measured to DIN EN 1465, more preferably as described in the examples, of more than 10 MPa, more than 15 MPa, more than 20 MPa, and/or
- a tensile strength, especially measured to DIN EN ISO 527, more preferably as described in the examples, of more than 10 MPa, more than 15 MPa, more than 20 MPa, and/or
- a modulus of elasticity, especially measured to DIN EN ISO 527, more preferably as described in the examples, of 300-3000 MPa, preferably 1000-3000 MPa.

The thermosetting epoxy resin composition of the invention is preferably not capable of curing by means of free-radical polymerization reactions, especially free-radical polymerization reactions induced by UV/light or free-radical polymerization reactions induced by heat.

It has been found that the thermosetting epoxy resin compositions described are particularly suitable for use as one-component thermosetting adhesives, especially as thermosetting one-component adhesive in motor vehicle construction and sandwich panel construction. Such a one-component adhesive has a range of possible uses. More particularly, thermosetting one-component adhesives that feature high impact resistance, both at higher temperatures and at low temperatures, are achievable thereby. Such adhesives are required for the bonding of heat-stable materials. Heat-stable materials are understood to mean materials that are dimensionally stable at least during the curing time at a curing temperature of 100-220°C, preferably 120-200°C, at least during the curing time. More particularly, these are metals and plastics such as ABS, polyamide, polyphenylene ether, composite materials such as SMC, unsaturated polyesters GFR, epoxy or acrylate composite materials. Preference is given to the use in which at least one material is a metal. A particularly preferred use is considered to be the bonding of identical or different metals, especially in bodywork construction in the automobile industry. The preferred metals are in particular steel, especially electrolytically galvanized, hot dip-galvanized, oiled steel, Bonazinc-coated steel, and subsequently phosphated steel, and also aluminum, especially in the variants that typically occur in automobile construction.

Such an adhesive is especially contacted first with the materials to be bonded at a temperature of between 10°C and 80°C, especially between 10°C and 60°C, and later cured at a temperature of typically 100-220°C, preferably 120-200°C.

A further aspect of the present invention relates to a method of bonding heat-stable substrates, comprising the steps of:
i) applying a thermosetting epoxy resin composition as described in detail above to the surface of a heat-stable substrate **S1**, especially of a metal;
ii) contacting the thermosetting epoxy resin composition applied with the surface of a further heat-stable substrate **S2,** especially of a metal;
iii) heating the composition to a temperature of 100-220°C, especially of 120-200°C.

The substrate **S2** here consists of the same material as or a different material than the substrate **S1.**

The substrates **S1** and/or **S2** are especially the aforementioned metals and plastics.

Preferably, in step iii) heating the composition to a temperature of 100-220°C, especially of 120-200°C, the composition is left at the aforementioned temperature for 10 min - 6 h, 10 min - 2 h, 10 min - 60 min, 20 min - 60 min.

Preferably, the method does not include any step comprising a free-radical polymerization of the thermosetting epoxy resin composition. Preferably, the method does not include any step of free-radical polymerization reaction induced by UV/light or free-radical polymerization reactions induced by heat.

Such a method of bonding heat-stable materials results in an adhesive-bonded article. Such an article is preferably a motor vehicle or part of a motor vehicle.

A further aspect of the present invention is therefore an adhesive-bonded article obtained from the aforementioned method. It is of course possible to use a composition of the invention to realize not only thermosetting adhesives but also sealing compounds. In addition, the compositions of the invention are suitable not just for automobile construction but also for other fields of use. Particular mention should be made of related applications in the transportation sector such as ships, trucks, buses or rail vehicles, or in the construction of consumer goods, for example washing machines.

The materials adhesive-bonded by means of a composition of the invention are used at temperatures between typically 120°C and -40°C, preferably between 100°C and -40°C, especially between 80°C and -40°C.

A particularly preferred use of the thermosetting epoxy resin composition of the invention is the use thereof as a thermosetting one-component bodywork adhesive in motor vehicle construction or as a stiffening compound or as a foamable, thermosetting composition for the reinforcement of voids in structural components and reinforcing elements.

A further aspect of the present invention relates to a cured epoxy resin composition as obtained by heating a thermosetting epoxy resin composition as described in detail above. The heating is typically effected in an oven at a temperature of 100-220°C, preferably between 120 and 200°C, preferably for 10 min - 6 h, 10 min - 2 h, 10 min - 60 min, 20 min - 60 min, at the aforementioned temperature.

The invention further encompasses the use of porous particles **PP,** preferably silica particles **PS**, which have incorporated in the pores at least one component **ComP,** as described above for increasing the storage stability of a one-component thermosetting epoxy resin composition, especially a thermosetting epoxy adhesive, preferably in motor vehicle construction and sandwich panel construction. Preference is given to a thermosetting epoxy resin composition as described above.

The increase in the storage stability is based on the comparison with one-component thermosetting epoxy resin compositions that do not contain any of the aforementioned porous particles **PP,** preferably silica particles **PS**, which have incorporated in the pores at least one component **ComP.**

Storage stability is preferably determined by viscosity measurements of the one-component thermosetting epoxy resin composition, especially on the basis of the determination of the percentage rise in viscosity that arises after storage.

The percentage rise in viscosity is preferably that after storage at 60°C for 3 days; more particularly, the viscosity measurements are conducted before and after storage, at a temperature of 25°C in each case.

More preferably, the percentage rise in viscosity that arises after storage is determined as follows. The starting viscosity is determined one day after production of the one-component thermosetting epoxy resin composition on an MCR 302 rheometer from Anton Paar by oscillation using a plate-plate geometry at a temperature of 25°C with the following parameters: 5 Hz, 1 mm gap, plate diameter 25 mm, 1% deformation.

The storage stability of the adhesives is assessed by repeating the viscosity measurement after storage at 60°C for 3 days and ascertaining the percentage rise in viscosity that arises after the storage. The viscosity measurements before and after the storage are each conducted at a temperature of 25°C.

Preferably, the type and amount used of the porous particles **PP,** preferably silica particles **PS**, which have incorporated in the pores at least one component **ComP,** correspond to the type and amount described above; more particularly, the types and amounts designated as preferred above are also used with preference.

Preferably, in the use of the invention, the percentage rise in viscosity that arises after storage at 60°C for 3 days, compared to a one-component thermosetting epoxy resin composition that contains the same amount of the component **ComP** but not incorporated in the pores of the aforementioned porous particles **PP,** which have incorporated in the pores at least one component **ComP,** is not more than 400%, preferably not more than 300%, more preferably not more than 250%.

### Examples

Some examples that further illustrate the invention are cited hereinafter but are not intended to restrict the scope of the invention in any way.

**Table 1, raw materials used**

| | |
|---|---|
| A | Liquid epoxy resin, D.E.R. 331 (bisphenol A diglycidyl ether), Dow |
| B1 | Dicyandiamide (= *"Dicy"*) |
| B2 | Ancamine 1922A, [3,3'-(Oxybis(2,1-ethanediyloxy)) bis-1-popanamine], Evonik |
| C1 | (1-(3-Aminopropyl)-imidazole) (API), CAS: 5036-48-6, BASF |
| C2 | 1,1-dimethylurea, substituted urea, CAS: 598-94-7 Sigma-Aldrich |
| C3 | 1,1'-(4-Methyl-1,3-phenylene)bis(3,3-dimethylurea), substituted urea, CAS: 17526-94-2, Sigma-Aldrich |
| C4 | 1-Ethyl-3-methylimidazoliumion dicyanamide, Basionics^{®} VS03, BASF |
| C5 | 85% tris-2,4,6-dimethylaminomethyl phenole, 15% 2,6-bis((dimethylamino)methyl)phenole, Ancamine^{®} K54, Evonik |
| PS1 | ZEOprep^{®}60, non-derivatized silicate particles, CAS: 7631-86-9, 6 nm pore size and a particle size of 40-63 µm, Zeochem |
| PS2 | ZEOprep^{®}60 C18, octandecyl-derivatized silicate particles, CAS: 7631-86-9, 6 nm pore size and a particle size of 40-63 µm, Zeochem |
| F1 | Fumed silica, Aerosil^{®} R202, Evonik |
| F2 | Calcium oxide |
| F3 | Calcium carbonate, Omyacarb^{®}, Omya |
| | Poly-THF 2000 (difunctional polybutylene glycol) (OH equivalent weight = about 1000 g/OH equivalent), BASF |
| | PolyBD R45V (hydroxyl-terminated polybutadiene) (OH equivalent weight = about 1230 g/OH equivalent), Cray Valley |
| | Isophorone diisocyanate (= "*IPDI*")*,* Evonik |
| | Cardolite NC-700 (cardanol, meta-substituted alkenylmonophenol), Cardolite |

### Preparation of a toughness improver ("D-1")

150 g of poly-THF 2000 (OH number 57 mg/g KOH) and 150 g of PolyBD R45V (OH number 46 mg/g KOH) were dried under reduced pressure at 105°C for 30 minutes. Once the temperature had been reduced to 90°C, 61.5 g of IPDI and 0.14 g of dibutyltin dilaurate were added. The reaction was conducted under reduced pressure at 90°C until the NCO content was constant at 3.10% after 2.0 h (calculated NCO content: 3.15%). Subsequently, 96.1 g of cardanol were added as blocking agent. Stirring was continued at 105°C under reduced pressure until it was no longer possible to detect any free NCO. The product was used as such as toughness improver ***D-1*.**

### Loading with C3 ("PS1-C3, PS2-C3")

A saturated solution of C3 (3.01 g) in methanol (25 ml) was prepared. Turbidity was removed by centrifugation (150 s-1, 13 °C, 5 min.) and the solution was filtered using a syringe filter (PET, 0.45 µm) and the filtrate was used for loading.

15.45 g of PS1, PS2 respectively, was weighed into a two-necked round bottom flask and stirred. A reduced pressure of 400 mbar was generated in the flask and maintained for 5 minutes. 22 ml of the above-mentioned filtrate solution was added dropwise via a dropping funnel under reduced pressure, so that a slightly moist, sticky, white mass was present. After stirring for 5 minutes, the dropping funnel was removed and a reduced pressure of 100 mbar was generated for 15 minutes. Finally, the product was dried in a vacuum drying cabinet at 80° C at 100 mbar for 3 hours.

### Loading with C2 ("PS1-C2, PS2-C2")

A saturated solution of C2 (4.01 g) in methanol (30 ml) was prepared. Any turbidity was removed by centrifugation (150 s-1, 13 °C, 5 min.), the solution was filtered using a syringe filter (PTFE, 0.45 µm) and the filtrate was used for loading.

15.45 g of PS1, PS2 respectively, was weighed into a two-necked round bottom flask and stirred. A reduced pressure of 400 mbar was generated in the flask and maintained for 5 minutes. 22 ml of the above-mentioned filtrate solution was added dropwise via a dropping funnel under reduced pressure, so that a slightly moist, sticky powder was present. After stirring for 5 minutes, the dropping funnel was removed and a reduced pressure of 100 mbar was generated for 15 minutes. Finally, the product was dried in a vacuum drying cabinet at 80° C at 100 mbar for 3 hours.

### Loading with B2 ("PS1-B2, PS2-B2")

15.45 g of PS1, PS2 respectively, was weighed into a two-necked round bottom flask and stirred. A reduced pressure of 400 mbar was generated in the flask and maintained for 5 minutes. 12 ml of B2 was added dropwise via a dropping funnel under reduced pressure, so that a dry, slightly yellowish, free flowing powder was present. After stirring for 5 minutes, the dropping funnel was removed.

### Loading with C5 ("PS1-C5, PS2-C5")

A mixed solution of C5 (30 ml) and methanol (15 ml) was prepared.

15.45 g of PS1, PS2 respectively, was weighed into a two-necked round bottom flask and stirred. A reduced pressure of 400 mbar was generated in the flask and maintained for 5 minutes. 12 ml of said mixed solution was added dropwise via a dropping funnel under reduced pressure, so that a slightly moist, sticky powder was present. After stirring for 5 minutes, the dropping funnel was removed and a reduced pressure of 100 mbar was generated for 15 minutes. Finally, the product was dried in a vacuum drying cabinet at 80° C. at 100 mbar for 3 hours.

### Loading with C4 ("PS1-C4, PS2-C4")

A mixed solution of C4 (8 ml) and methanol (3 ml) was prepared.

15.45 g of PS1, PS2 respectively, was weighed into a two-necked round bottom flask and stirred. A reduced pressure of 400 mbar was generated in the flask and maintained for 5 minutes 12 ml of said mixed solution was added dropwise via a dropping funnel under reduced pressure so that a so that a slightly moist, sticky powder was present. After stirring for 5 minutes, the dropping funnel was removed and a reduced pressure of 100 mbar was generated for 15 minutes. Finally, the product was dried in a vacuum drying cabinet at 80° C. at 100 mbar for 3 hours.

### Loading with C1 ("PS1-C1, PS2-C1")

15.45 g of PS1, PS2 respectively, was weighed into a two-necked round bottom flask and stirred. A reduced pressure of 400 mbar was generated in the flask and maintained for 5 minutes. Undiluted C1 was added dropwise via a dropping funnel under reduced pressure so that a dry, slightly yellowish, free-flowing powder was present.

### Loading density analysis method

To determine the amount of component **ComP** loaded in the porous silicate particles, thermogravimetric analysis (TGA) was used. Loaded and unloaded porous silicate samples were weighed in an oven on a microbalance and heated. Accordingly, the change in mass with temperature and time was recorded. The TGA method was based on the one described in the literature by A. Hillerström, J. van Stam, M. Andersson, Green Chem. 2009, 11, 662-66.

### %

Determined loading of the PS1, PS2 respectively:

**Table 2, loading determination of PS-ComP**

| PS-ComP | Amount component **ComP** (g) / 1 g of PS-ComP |
|---|---|
| PS1-B2 | 0.28 |
| PS2-B2 | 0.16 |
| PS1-C1 | 0.31 |
| PS2-C1 | Not determined |
| PS1-C2 | 0.082 |
| PS2-C2 | 0.055 |
| PS1-C3 | 0.10 |
| PS2-C3 | 0.046 |
| PS1-C4 | 0.29 |
| PS2-C4 | 0.10 |
| PS1-C5 | 0.17 |
| PS2-C5 | 0.10 |

### %

### Determination of qualitative storage stability

To carry out qualitative storage stability tests, the formulations shown in table 3 were made from 0.035 mol liquid epoxy resin A, 0.012 mol DICY B1 and the following amount in mol of the appropriate component **ComP, PS-ComP** respectively:
C2: 0.006818 mol
C3: 0.00378 mol
B2: 0.00532 mol
C5: 0.00377 mol
C4: 0.0056 mol

The appropriate component **ComP** was either added in pure form or loaded on PS-1 or PS-2.

Approx. 1-2 g of each of these mixed samples were placed in an Eppendorf tube and stored in an oven at 60 °C. The hardening of each was examined qualitatively at regular intervals and the progress of the hardening was thus determined.

The results of the qualitative storage stability study are given in table 3. The classifications into which the samples were divided serve the qualitative assessment of the hardening process that has occurred. 1 means no hardening and a liquid state of the sample, 2 stands for a highly viscous state, 3 for the presence of a hard mass.

**Table 3**

| | **initial** | **1 d** | **2 d** | **3 d** | **4 d** | **7 d** |
|---|---|---|---|---|---|---|
| C2 | 1 | 1 | 1 | 1 | 1 | 3 |
| PS2-C2 | 1 | 1 | 1 | 1 | 1 | 3 |
| PS1-C2 | 1 | 1 | 1 | 1 | 1 | 2 |
| C3 | 1 | 2 | 3 | 3 | 3 | 3 |
| PS2-C3 | 1 | 2 | 3 | 3 | 3 | 3 |
| PS1-C3 | 1 | 1 | 3 | 3 | 3 | 3 |
| B2 | 1 | 1 | 1 | 2 | 3 | 3 |
| PS2-B2 | 1 | 1 | 1 | 1 | 1 | 3 |
| PS1-B2 | 1 | 1 | 1 | 1 | 1 | 1 |
| C5 | 1 | 3 | 3 | 3 | 3 | 3 |
| PS2-C5 | 1 | 3 | 3 | 3 | 3 | 3 |
| PS1-C5 | 1 | 1 | 1 | 2 | 2 | 3 |
| C4 | 1 | 2 | 3 | 3 | 3 | 3 |
| PS2-C4 | 1 | 1 | 2 | 3 | 3 | 3 |
| PS1-C4 | 1 | 1 | 1 | 1 | 1 | 2 |
| PS2 unloaded | 1 | 1 | 1 | 1 | 1 | 1 |
| PS1 unloaded | 1 | 1 | 1 | 1 | 1 | 1 |
| - (A and B1 only) | 1 | 1 | 1 | 1 | 1 | 1 |

It can be seen from table 3 that components **ComP** incorporated in the pores of silicate particles (PS) show improved storage stability compared to the addition of components **ComP** not loaded on silicate particles. Further, it can be seen from table 3 that the loaded non-derivatized silicate particles (PS1) show improved storage stability compared to derivatized silicate particles (PS2).

### Determination of quantitative storage stability

To determine the quantitative influence of the components **ComP** incorporated in the pores of silicate particles (PS) on the storage stability, basic formulations of a structural adhesive were prepared as listed in table 4. The results of these tests are presented in table 5 and 6 as triplicate determinations. A composition without additional **ComP** ("-") and a composition with unloaded silicate particles ("PS1") were prepared as controls. Composition for C1 and C4 not loaded on silicate particles ("C1" or "C4") were prepared and compared to compositions containing C1 or C4 loaded on silicate particles ("PS1-C1" or "PS1-C4"). The same molar amount of C1, C4 respectively, was used in the comparison of "C1" with "C1-PS1", "C4" with "C4-PS1" respectively.

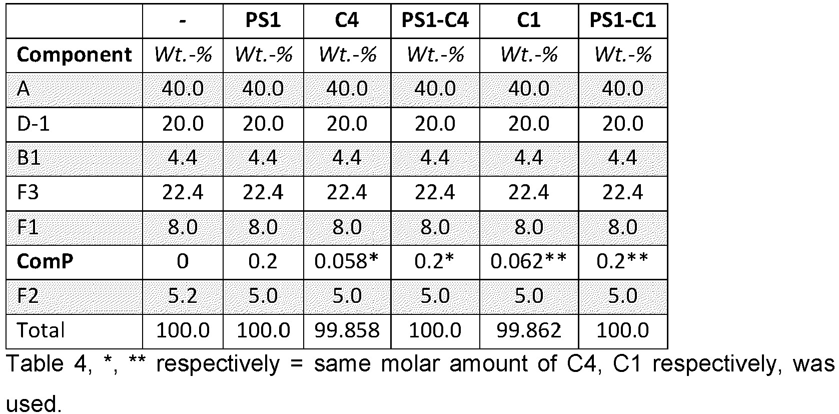

**Table 5, mechanical properties**

| | **t / min = 30** | **t / min = 15** | **t / min = 35** | |
|---|---|---|---|---|
| | **T / °C** = **180** | **T / °C** = **165** | **T / °C** = **180** | |
| | **TSS / MPa** | **TSS / MPa** | **TS / MPa** | **E-Mod / MPa** |
| - | n.d. | 7.8 | 31.1 | 2550 |
| PS1 | n.d. | 13.1 | 31.9 | 2690 |
| C4 | n.d. | 22.3 | 29.7 | 2870 |
| PS1-C4 | n.d. | 21.6 | 29.6 | 2930 |
| C1 | 22.0 | 23.3 | 32.8 | 2510 |
| PS1-C1 | 24.6 | 23.9 | 32.3 | 2500 |

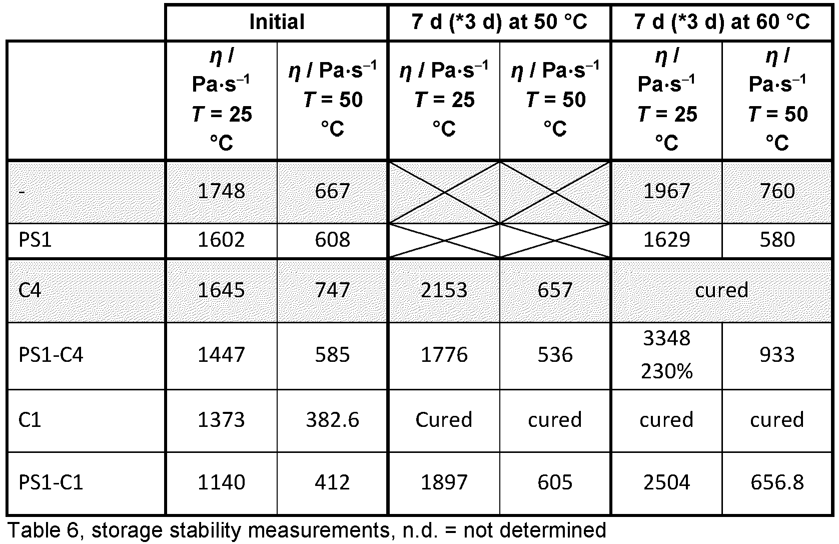

### Test methods:

### Tensile strength ("TS") and modulus of elasticity ("E-Mod") (DIN EN ISO 527)

An adhesive sample was pressed between two Teflon papers to a layer thickness of 2 mm. After curing at 180°C for 35 min, the Teflon papers were removed, and the specimens were die-cut to the DIN standard. The test specimens were examined under standard climatic conditions at a strain rate of 2 mm/min. Tensile strength (TS), elongation at break and the 0.05-0.25% modulus of elasticity were measured to DIN EN ISO 527.

### Tensile shear strength ("TSS") (DIN EN 1465)

Cleaned test specimens of Elo H420 steel (thickness 1.2 mm) that had been reoiled with Anticorit PL 3802-39S were bonded over a bonding area of 25 x 10 mm to the adhesive with glass beads as spacer in a layer thickness of 0.3 mm, and cured at oven temperature 165°C for 15 min, 180°C for 30 min respectively. A temperature probe was secured to the surface of each test specimen (substrate surface). The attainment of the temperature specified, accurately to 1°C, was the start of the measurement of the curing time in each case.

Tensile shear strength was determined on a tensile testing machine at a strain rate of 10 mm/min in a triplicate determination to DIN EN 1465.

### Viscosity/storage stability of adhesives

Viscosity measurements of the compositions were effected immediately ("initial") after production on an Anton Paar MCR 302 rheometer by oscillation using a plate-plate geometry at a temperature of 25°C or 50°C with the following parameters: 5 Hz, 1 mm gap, plate diameter 25 mm, 1% deformation.

For assessment of the storage stability of the adhesives, the viscosity measurement was repeated after storage at the specified temperatures (50°C, 60°C respectively) for a specified time in days (d), and the percentage rise in viscosity that results after the storage was ascertained.

## Claims

1. A one-component thermosetting epoxy resin composition comprising
a) at least one epoxy resin **A** having an average of more than one epoxy group per molecule;
b) porous particles **PP**, selected from the group consisting of zeolite particles, perlite particles, phonolite particles, calcium silicate particles, silica particles **PS**, foamed polyurethane particles, expanded vermiculite particles, fumed metal oxide particles, and kieselguhr particles, preferably silica particles **PS**,
which have incorporated in the pores at least one component **ComP** which is:
- i) a curing agent for epoxy resins **B**, or
- ii) an accelerator **C** for curing agents for epoxy resins.

2. The one-component thermosetting epoxy resin composition as claimed in claim 1, wherein the porous particles **PP** are porous silica particles **PS**, preferably non-derivatized porous silica particles **PS.**

3. The one-component thermosetting epoxy resin composition as claimed in either of the preceding claims, wherein the porous particles **PP** have a pore size of 4 - 30 nm, preferably 5-10 nm, more preferably 5 - 8 nm.

4. The one-component thermosetting epoxy resin composition as claimed in either of the preceding claims, wherein the porous particles **PP** have a particle size from 5 - 500 µm, preferably 20 - 150 µm, more preferably 30 - 100 µm.

5. The one-component thermosetting epoxy resin composition as claimed in either of the preceding claims, wherein the amount of the at least one component **ComP,** incorporated in the pores of the porous particles **PP**, 4 - 50 wt.-%, preferably 8 - 40 wt.-%, more preferably 10 - 35 wt.-%, based on the total weight of the porous particles **PP.**

6. The one-component thermosetting epoxy resin composition as claimed in either of the preceding claims, wherein the at least one component **ComP** is:
- i) a curing agent for epoxy resins **B**, which is selected from the list consisting of aliphatic, cycloaliphatic or arylaliphatic primary di- or triamines; ether group-containing aliphatic primary di- or triamines; and polyamines containing secondary amino groups, preferably ether group-containing aliphatic primary di- or triamines; or
- ii) an accelerator **C** for curing agents for epoxy resins, which is selected from the list consisting substituted ureas, imidazoles, imidazolines, blocked amines and tertiary amines, preferably substituted ureas, imidazoles and tertiary amines, more preferably imidazoles.

7. The one-component thermosetting epoxy resin composition as claimed in either of the preceding claims, wherein the at least one component **ComP** is a curing agent for epoxy resins **B**, which is selected from the list consisting of aliphatic, cycloaliphatic or arylaliphatic primary di- or triamines; ether group-containing aliphatic primary di- or triamines; and polyamines containing secondary amino groups, preferably ether group-containing aliphatic primary di- or triamines, more preferably primary polyoxyalkylene di- or -triamines.

8. The one-component thermosetting epoxy resin composition as claimed in either of the preceding claims 1 - 6, wherein the at least one component **ComP** is an accelerator **C** for curing agents for epoxy resins, which is selected from the list consisting substituted ureas, imidazoles, imidazolines, blocked amines and tertiary amines, preferably substituted ureas, imidazoles and tertiary amines, more preferably imidazoles.

9. The one-component thermosetting epoxy resin composition as claimed in either of the preceding claims 1-6 and 8, wherein the at least one component **ComP** is an accelerator C for curing agents for epoxy resins, which is an N-aminoalkylimidazolyl compound, preferably of general formula (IV): 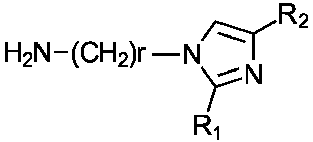 in which R₁ and R₂, independently of one another, are aliphatic or aromatic hydrocarbon radicals, but in particular H-, CH₃, C₂H₅-, preferably H-, and r = 2-4, in particular = 3, more preferably (1-(3-aminopropyl)imidazole).

10. The one-component thermosetting epoxy resin composition as claimed in either of the preceding claims 1-6 and 8, wherein the at least one component **ComP** is an accelerator C for curing agents for epoxy resins, which is an imidazolium salt of formula (V): 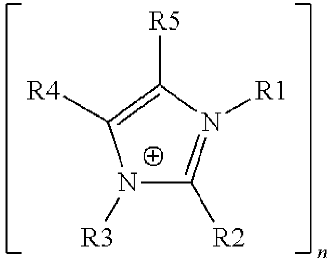 in which
R1 is an organic radical having 1 to 20 C atoms,
R2, R3, R4, and R5 are each an H atom or an organic radical having 1 to 20 C atoms,
X is an anion, and
n is 1, 2, or 3, preferably 1;
preferably, the imidazolium salt of formula (V) is selected from 1-methyl-3-methylimidazolium thiocyanate, 1-methyl-3-ethylimidazolium thiocyanate, 1-methyl-3-methylimidazolium dicyanamide and 1-methyl-3-ethylimidazolium dicyanamide, especially 1-methyl-3-methylimidazolium dicyanamide.

11. The one-component thermosetting epoxy resin composition as claimed in either of the preceding claims, wherein the porous particles **PP**, which have incorporated in the pores at least one component **ComP,** were prepared by a method, which comprises
I) dispersing the porous particles **PP** in the at least one component **ComP,** optionally in the presence of a solvent; or
I') adding the at least one component **ComP,** optionally as a solution containing a solvent, to the particles **PP**; and
II) preferably isolating the porous particles **PP** containing the at least one component **ComP** incorporated in the pores of the porous particles **PP**; and
III) optionally removing any solvent, preferably evaporation, more preferably by vacuum evaporation.

12. The one-component thermosetting epoxy resin composition as claimed in either of the preceding claims, wherein the weight ratio of the at least one epoxy resin **A** having an average of more than one epoxy group per molecule to the porous particles **PP**, which have incorporated in the pores at least one component **ComP (A** : **PP),** is 20-800 : 1, preferably 75-400 : 1, more preferably 150-300 : 1.

13. The one-component thermosetting epoxy resin composition as claimed in any of the preceding claims, wherein the thermosetting epoxy resin composition additionally includes at least one toughness improver **D** selected from the group consisting of terminally blocked polyurethane polymers **D1,** liquid rubbers **D2** and core-shell polymers **D3,** and is preferably a terminally blocked polyurethane polymer **D1.**

14. The use of porous particles **PP** which have incorporated in the pores at least one component **ComP,** as described as particles **PP** in any of the preceding claims, for increasing the storage stability of a one-component thermosetting epoxy resin composition, especially a thermosetting epoxy adhesive.

15. A method of bonding thermally stable substrates, comprising the steps of
i) applying a thermosetting epoxy resin composition as claimed in any of claims 1 to 13 to the surface of a thermally stable substrate **S1**, especially of a metal;
ii) contacting the thermosetting epoxy resin composition applied with the surface of a further thermally stable substrate **S2**, especially of a metal;
iii) heating the composition to a temperature of 100-220°C, especially of 120-200°C;
wherein the substrate **S2** consists of the same material or a different material than the substrate **S1.**
